# EUROPEAN PATENT SPECIFICATION

(11) **EP 3 121 085 B1**
(45) Date of publication and mention of the grant of the patent: **16.10.2019**
(21) Application number: 15765485.6
(22) Date of filing: 04.02.2015
(51) Int. Cl.: B60W 50/10, G01C 21/00, G01C 21/36, G08G 1/16

(54) **VEHICLE OPERATION DEVICE**
FAHRZEUGBETRIEBSVORRICHTUNG
DISPOSITIF D'ACTIONNEMENT DE VÉHICULE

(30) Priority: 18.03.2014 JP 2014054458
(43) Date of publication of application: 25.01.2017
(73) Proprietor: NISSAN MOTOR CO., LTD., Yokohama-shi, Kanagawa 221-0023 (JP)
(72) Inventor: SAKUMA, Tsuyoshi, Atsugi-shi, Kanagawa 243-0123 (JP)
(74) Representative: Grünecker Patent- und Rechtsanwälte PartG mbB
(86) International application number: PCT/JP2015/053035
(87) International publication number: WO 2015/141308

(56) References cited:
- JP-A- H08 305 994
- JP-A- H09 184 737
- JP-A- 2006 284 218
- JP-A- 2008 032 629
- JP-A- 2008 157 777
- JP-A- 2009 015 498
- JP-A- 2010 198 578
- JP-A- 2012 083 355
- JP-A- 2012 083 358
- JP-A- 2012 083 358
- US-A1- 2006 224 316
- US-A1- 2012 022 716

## Description

The present invention relates to a vehicle operation device for operating an autonomous vehicle.

Autonomous vehicles are known that detect peripheral conditions of the vehicles and autonomously take actions safely, such as lane changes and right/left turns, so as to drive along determined driving routes (refer to Patent Literature 1). In such an autonomous vehicle, when a new intention arises, such as when a purpose of an occupant changes during driving or when the occupant is unsatisfied with a driving plan selected by a system, the occupant is required to instruct the system to change the route or plan.

Patent Literature 1: Japanese Unexamined Patent Application Publication No. 2001-301484
From US 2012/0022716 the generation of a movement trajectory for use in automated driving is known. Based on the result of recognizing surrounding objects "movement strategies" are generated (including traveling straight, turning right etc.) and a movement trajectory is generated based on an automatically selected movement strategy. The selected movement trajectory is displayed on a display device to the passenger wherein the selected movement strategy is shown with nodes and lines connecting the nodes. Separately, alternative movement strategies are listed on the display wherein for each movement strategy the nodes are mentioned which are passed through by the individual movement strategies. The selected movement strategy as well as the movement trajectory can be changed on the display.

JPH08305994 describes the detection of a lane on a street by a moving vehicle. When approaching an intersection, all possible driving directions are indicated to the driver. Those directions which can be reached from the present lane are marked differently, but in identical manner. By touching an arrow an instruction to move the car to another lane is made.

### SUMMARY OF INVENTION

The addition of places passing through or the change of routes or plans increases and complicates the steps of the operation, which prevents an immediate change of action for driving.

In view of the foregoing, an object of the present invention is to provide a vehicle operation device that allows an occupant to immediately change an action performed by an autonomous vehicle. This is achieved by the features of the independent claims.

A vehicle operation device is used in an autonomous vehicle autonomously controlled to drive along a determined driving route, and includes a presenting unit and an instruction unit. The presenting unit shows, to an occupant of the autonomous vehicle, a current action of the autonomous vehicle and a next action of the autonomous vehicle performed after a predetermined lapse of time. The instruction unit designates intended actions according to an operation of the occupant as the actions performed by the autonomous vehicle shown on the presenting unit, and instructs the autonomous vehicle to perform the actions designated according to the operation of the occupant.

### BRIEF DESCRIPTION OF DRAWINGS

Fig. 1 is a block diagram for describing a fundamental configuration of an autonomous vehicle according to an embodiment of the present invention.
Fig. 2 is a view showing an instruction unit and a presenting unit, for describing a first operation example of a vehicle operation device included in the autonomous vehicle according to the embodiment of the present invention.
Fig. 3 is a top view of the autonomous vehicle, for schematically describing a second operation example of the vehicle operation device included in the autonomous vehicle according to the embodiment of the present invention.
Fig. 4 is a view showing the instruction unit and the presenting unit, for describing the second operation example of the vehicle operation device included in the autonomous vehicle according to the embodiment of the present invention.
Fig. 5 is a view showing the instruction unit and the presenting unit, for describing the second operation example of the vehicle operation device included in the autonomous vehicle according to the embodiment of the present invention.
Fig. 6 is a view showing the instruction unit and the presenting unit, for describing a third operation example of the vehicle operation device included in the autonomous vehicle according to the embodiment of the present invention.
Fig. 7 is a top view of the autonomous vehicle for schematically describing a fourth operation example of the vehicle operation device included in the autonomous vehicle according to the embodiment of the present invention.
Fig. 8 is a view showing the instruction unit and the presenting unit, for describing the fourth operation example of the vehicle operation device included in the autonomous vehicle according to the embodiment of the present invention.
Fig. 9 is a top view of the autonomous vehicle for schematically describing a fifth operation example of the vehicle operation device included in the autonomous vehicle according to the embodiment of the present invention.
Fig. 10 is a view showing the instruction unit and the presenting unit, for describing the fifth operation example of the vehicle operation device included in the autonomous vehicle according to the embodiment of the present invention.
Fig. 11 is a view showing the instruction unit and the presenting unit, for describing the fifth operation example of the vehicle operation device included in the autonomous vehicle according to the embodiment of the present invention.
Fig. 12 is a top view of the autonomous vehicle for schematically describing the fifth operation example of the vehicle operation device included in the autonomous vehicle according to the embodiment of the present invention.
Fig. 13(a) to Fig. 13(c) are views for describing instruction units included in an autonomous vehicle according to other embodiments of the present invention.

### DESCRIPTION OF EMBODIMENTS

Hereinafter, embodiments of the present invention will be described with reference to the drawings. The same or similar elements shown in the drawings are indicated by the same or similar reference numerals, and overlapping descriptions are not repeated.

### [Autonomous Vehicle]

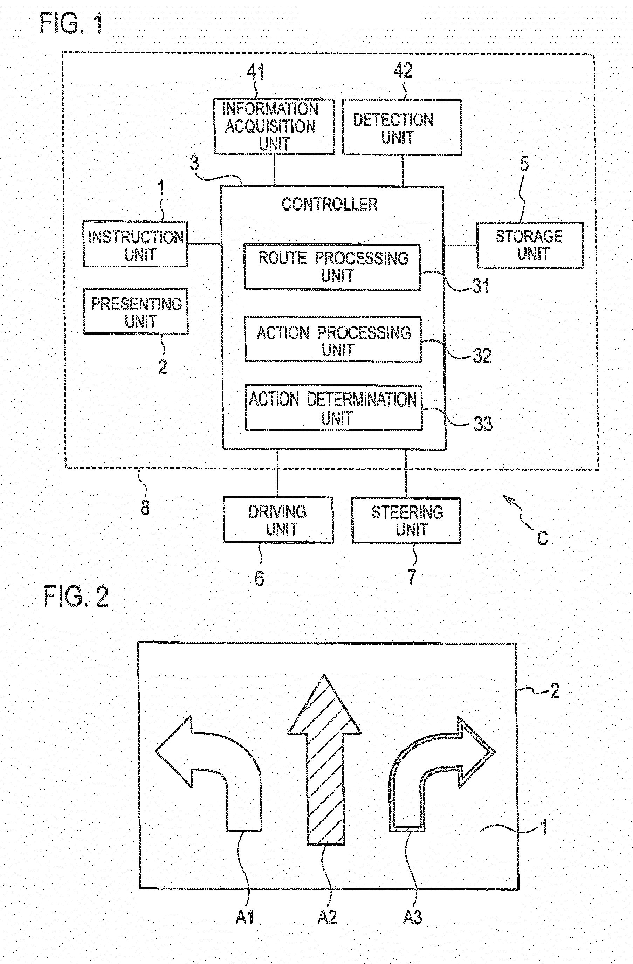

As shown in Fig. 1, an autonomous vehicle C according to an embodiment of the present invention includes a driving unit 6 for accelerating and decelerating the autonomous vehicle C, a steering unit 7 for steering the autonomous vehicle C, and a vehicle operation device 8 for controlling the driving unit 6 and the steering unit 7 to control the autonomous vehicle C. The autonomous vehicle C is autonomously controlled to drive along a driving route determined by the vehicle operation device 8.

The vehicle operation device 8 includes an instruction unit 1 that instructs the autonomous vehicle C to drive according to the operation performed by the occupant of the autonomous vehicle C, a presenting unit 2 that provides the occupant of the autonomous vehicle C with information, a controller 3 that controls the respective components included in the autonomous vehicle C. The vehicle operation device 8 further includes an information acquisition unit 41 that acquires various kinds of information about autonomous driving, a detection unit 42 that detects peripheral information of the autonomous vehicle C, and a storage unit 5 that stores data necessary for processing executed by the controller 3.

The instruction unit 1 includes, for example, an input device that receives the operation performed by the occupant and inputs a signal corresponding to the operation to the controller 3. The presenting unit 2 includes a display device on which images and characters provided for the occupant are displayed, and an output device for reproducing voices such as a speaker. The presenting unit 2 shows the occupant a current action of the autonomous vehicle C and a next action performed after a predetermined lapse of time. The instruction unit 1 and the presenting unit 2 integrally serve as a touch panel display, for example.

The controller 3 includes a route processing unit 31 that implements processing of control for a driving route along which the autonomous vehicle C drives, an action processing unit 32 that implements processing of control for actions of the autonomous vehicle C, and an action determination unit 33 that determines whether to permit actions performed by the autonomous vehicle C on the driving route. The controller 3 is, for example, a computer including a central processing unit (CPU) to implement calculation processing necessary for the autonomous vehicle C. The controller 3, the route processing unit 31, and the action processing unit 32 are indicated by elements having logical structures, and may be provided as independent hardware elements or may be provided as an integrated hardware element. The controller 3 controls the autonomous vehicle C to drive along the driving route safely and regally, according to the information from the information acquisition unit 41, the detection unit 42, and the storage unit 5.

The route processing unit 31 sets a destination of the autonomous vehicle C according to the instruction by the instruction unit 1, and searches for and determines the driving route to the destination from a starting point based on route search conditions including the starting point, the destination, and road information. The route search conditions may further include traffic information with regard to the driving route and the periphery thereof, time zones, a classification of road, and priority matters on determining the route.

The action processing unit 32 controls actions performed by the autonomous vehicle C, such as a forward movement, a right turn, a left turn, a lane change, and a stop. The action processing unit 32 shows the occupant, through the presenting unit 2, the action of the autonomous vehicle C currently performed on the driving route determined by the route processing unit 31 and the action of the autonomous vehicle C performed after a lapse of time from a current time.

The action determination unit 33 determines whether to permit each action of the autonomous vehicle C according to the information acquired by the information acquisition unit 41, the information detected by the detection unit 42, and traffic laws and regulations stored in the storage unit 5.

The information acquisition unit 41 acquires information externally via wireless communication and inputs the information into the controller 3. The information acquisition unit 41 acquires a current position of the autonomous vehicle C according to a positioning system such as a global positioning system (GPS). The information acquisition unit 41 also externally acquires road information such as traffic restrictions or prediction of traffic congestion. The information acquisition unit 41 may externally acquire other information such as map data.

The detection unit 42 includes sensors such as a camera, a distance measuring device, and a speedometer. The sensors, when using electromagnetic waves, can detect various frequency bands, such as radio waves, infrared light, and visible light. The detection unit 42 detects peripheral information of the autonomous vehicle C, including other vehicles, obstacles, alignments of driving routes, widths of roads, signposts, road signs, lane boundaries, and road conditions, and inputs the information into the controller 3.

The storage unit 5 includes a storage device such as a magnetic disk or a semiconductor memory. The storage unit 5 stores programs necessary for processing implemented by the controller 3, map data, and various kinds of data such as traffic laws and regulations. The storage unit 5 may also serve as a transitory storage medium for the processing implemented by the controller 3.

### [Operation Examples of Vehicle Operation Device]

The first to fifth operation examples of the vehicle operation device 8 will be described below while exemplifying some situations. Each situation is described as a case where the autonomous vehicle C is driving along a predetermined driving route.

### First Operation Example

As shown in Fig. 2, the presenting unit 2 displays at least arrows A1 to A3 indicating a forward movement, a right movement, and a left movement in three directions when the autonomous vehicle C is driving along a predetermined driving route, and shows the occupant the directions of a current movement and a next movement after a lapse of time. The instruction unit 1 composes the touch panel display together with the presenting unit 2, so that the regions corresponding to the arrows A1 to A3 can be operated by the occupant. When one of the arrows A1 to A3 indicating a direction to move is operated by the occupant, the instruction unit 1 instructs the autonomous vehicle C to move in the direction indicated by the arrow operated by the occupant. The instruction unit 1 is thus configured such that intended actions can be selected according to the operation of the occupant from the actions of the autonomous vehicle C shown on the presenting unit 2.

In the example shown in Fig. 2, the arrow A2 entirely hatched denotes that the current action is a forward movement, and the arrow A3 with the peripheral edge only hatched denotes that the action performed after a lapse of time is a right turn. The arrow A2 denotes that the current action of the autonomous vehicle C is a forward movement, and the arrow A3 denotes that the following action after a lapse of time is a right turn. The indication of the respective arrows A1 to A3 varies depending on the control by the action processing unit 32 so that the occupant can distinguish the current action of the autonomous vehicle C and the following action performed after a lapse of time.

### Second Operation Example

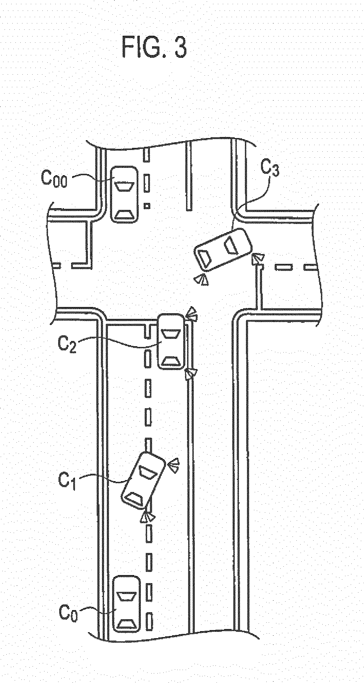

As shown in Fig. 3, the autonomous vehicle C shown at position C₀ is assumed to be moving straight along the driving route in the left lane of the road with two lanes divided by a lane boundary in each direction, and approaching the front intersection. When the autonomous driving is continued, the autonomous vehicle C keeps moving straight at position C₀₀ after a predetermine lapse of time. The presenting unit 2 only shows the arrow A2 denoting that the current action is a forward movement. It is assumed that the occupant desires to make a right turn at the front intersection.

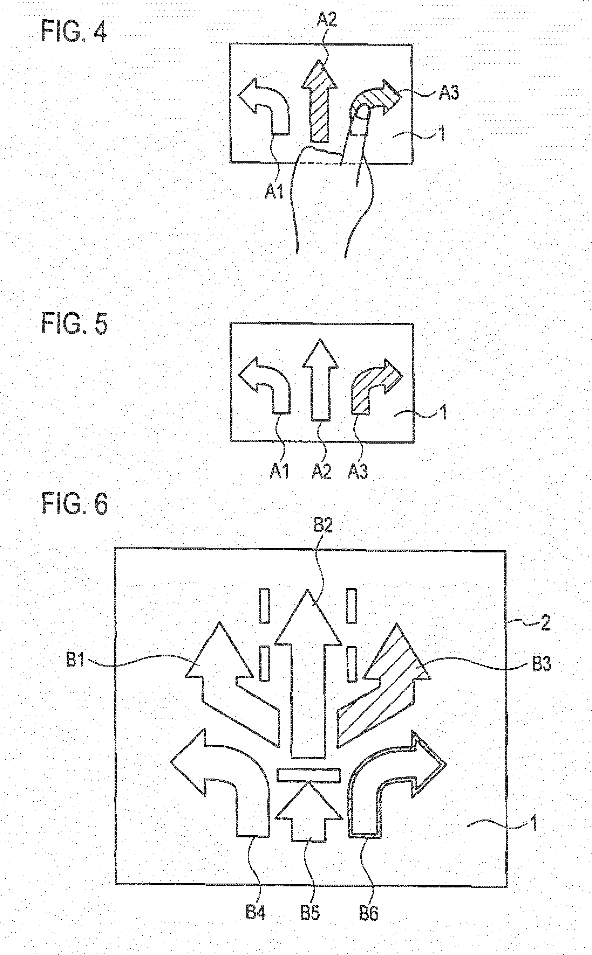

As shown in Fig. 4, the instruction unit 1 instructs the route processing unit 31 of the controller 3 to make a right turn according to the operation by the occupant performed on the region corresponding to the arrow A3. The presenting unit 2 notifies the occupant of a state that the instruction unit 1 has been operated appropriately, by changing the indication of the arrow A3 during the operation on the instruction unit 1. The presenting unit 2 may, for example, change colors between the arrows A1 to A3 indicating the current action and the action after a lapse of time and the arrows A1 to A3 having been operated.

The route processing unit 31 changes the route to make a right turn according to the instruction of the instruction unit 1. The autonomous vehicle C starts making a direction change to the adjacent right lane while putting a turn signal on, according to the control by the controller 3. As shown in Fig. 5, the presenting unit 2 changes the indications of the arrow A2 and the arrow A3 once the direction change is started, and changes the indicated current action from the forward movement to the right turn. The current action shown on the presenting unit 2 is indicated by the arrow A3 until the right turn is completed, and the action returns to the indication by the arrow A2 denoting the forward movement once the right turn is completed.

The action determination unit 33 analyzes the safety and regality of the direction change to the right lane according to the peripheral information of the autonomous vehicle C detected by the detection unit 42 and the traffic laws and regulations stored in the storage unit 5. When the action determination unit 33 determines that the direction change to the right lane is possible, the controller 3 controls the driving unit 6 and the steering unit 7 to bring the autonomous vehicle C to position C₁ as shown in Fig. 3, so as to complete the direction change to the right lane.

The autonomous vehicle C is controlled by the controller 3 to move straight in the right lane and then autonomously stop at position C₂ in front of the intersection according to the peripheral information. The autonomous vehicle C then enters the intersection, as indicated by position C₃, while autonomously keeping the safe driving, and further enters the intersecting road to complete the right turn. When the autonomous vehicle C completes the right turn, the route processing unit 31 again searches for and determines the drive route to the destination.

### Third Operation Example

As shown in Fig. 6, other additional marks are displayed on the presenting unit 2, so that the instruction unit 1 can give more instructions to the autonomous vehicle C. The presenting unit 2 displays six arrows B1 to B6. The arrows B1 to B6 indicate a direction change to a left lane, a forward movement, a direction change to a right lane, a left turn, a stop, and a right turn. The arrows A1, A2, and A3 shown in Fig. 2 correspond to the arrows B4, B2, and B6, respectively.

The presenting unit 2 displays marks patterned on lane boundaries between the arrows B1, B2, and B3 respectively indicating the forward left direction, the forward direction, and the forward right direction, so that the occupant can intuitively recognize what the respective arrows B1 and B3 indicate. The presenting unit 2 displays a mark patterned on a stop position line at the tip of the arrow B5 indicating the forward direction, so that the occupant can intuitively recognize what the arrow B5 indicates. The marks displayed on the presenting unit 2 may have any designs by which the occupant can recognize the meanings of the respective marks, but should be presented with shapes and colors that the occupant distinguishes easily. The marks indicated by the arrows B1 to B6 displayed on the presenting unit 2 allow the occupant to easily and intuitively distinguish the respective actions performed by the autonomous vehicle C.

In the example shown in Fig. 6, the arrow B3 entirely hatched denotes that the current action is a direction change to the adjacent right lane, and the arrow B6 with the peripheral edge only hatched denotes that the following action after a lapse of time is a right turn. The presenting unit 2 changes the indications of the arrows B1 to B6 depending on the control by the action processing unit 32 so that the occupant can distinguish the current action of the autonomous vehicle C and the following action after a lapse of time. The regions corresponding to the arrows B1 to B6 can be operated by the occupant, so that the instruction unit 1 can instruct the autonomous vehicle C to take the respective actions denoted by the arrows B1 to B6 when the corresponding regions are operated by the occupant.

### Fourth Operation Example

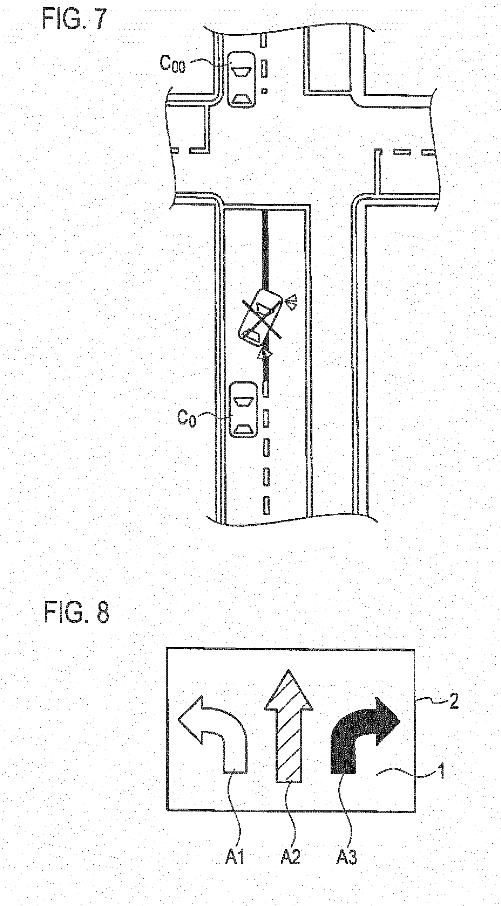

As shown in Fig. 7, the autonomous vehicle C shown at the position C₀ is assumed to be moving straight along the driving route in the left lane of the road with two lanes in each direction, and approaching the front intersection. When the autonomous driving is continued, the autonomous vehicle C keeps moving straight at the position C₀₀ after a predetermine lapse of time. The presenting unit 2 only shows the arrow A2 denoting that the current action is a forward movement. It is assumed that the occupant desires to make a right turn at the front intersection. However, the autonomous vehicle C is already entering a lane boundary indicating that lane changes are prohibited, and the right turn made at the position C₀ is an illegal action.

The action determination unit 33 determines that the autonomous vehicle C cannot make a right turn when moving around the position C₀, according to the information acquired by the information acquisition unit 41, the peripheral information of the autonomous vehicle C detected by the detection unit 42, and the traffic laws and regulations. The presenting unit 2, for example, changes the indication of the arrow A3 denoting the right turn, as shown in Fig. 8, according to the determination by the action determination unit 33, and shows the arrow A3 with a darker color than the arrows A1 and A2. The instruction unit 1 prohibits the operation by the occupant on the region corresponding to the arrow A3 in association with the change of the indication made by the presenting unit 2.

The presenting unit 2 changes the indication of the mark for prohibiting the autonomous vehicle C from taking the corresponding action, depending on road information, signposts, or road signs, so that the mark is indicated differently from the other marks, which allows the occupant to intuitively select another mark for the following action without confusion. Since the instruction unit 1 prohibits the operation by the occupant in association with the change of the indication made by the presenting unit 2, the autonomous vehicle C can be controlled to drive safely and regally.

### Fifth Operation Example

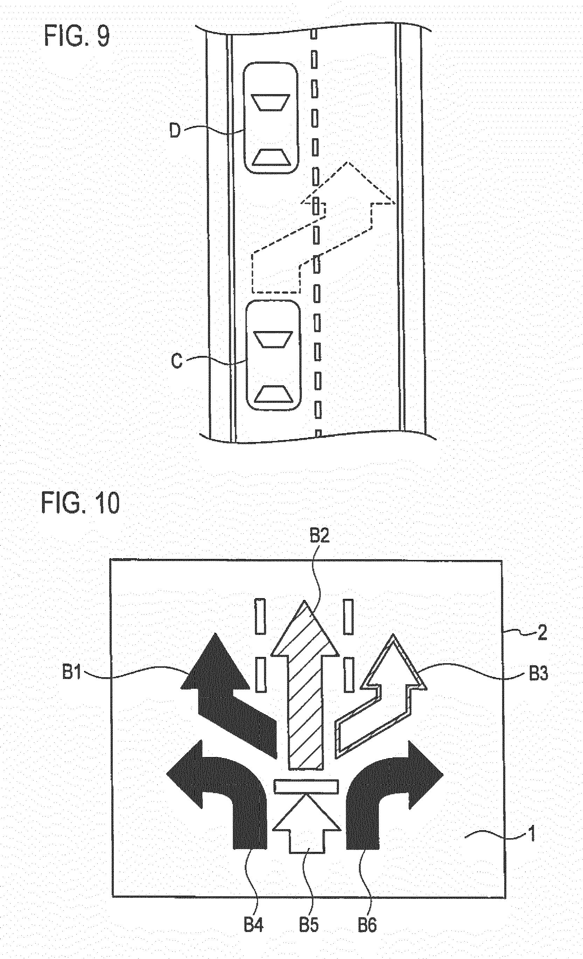

As shown in Fig. 9, it is assumed that the autonomous vehicle C is moving in the left lane of the road with two lanes in each direction, another vehicle D is moving at a lower speed in front of the autonomous vehicle C, and the controller 3 then selects the action to change the lane to overtake the vehicle D. As shown in Fig. 10, for example, the presenting unit 2 changes the indication of each of the arrow B1 denoting the direction change to the left lane, the arrow B4 denoting the left turn, and the arrow B6 denoting the right turn, so as to show these arrows with a darker color than the other arrows B2, B3, and B5. The instruction unit 1 prohibits the operation by the occupant on the regions corresponding to the arrows B1, B4, and B6 in association with the change of the indication made by the presenting unit 2.

The presenting unit 2 informs the occupant that the current action is a direction change to the adjacent right lane as indicated by the arrow B2 entirely hatched, and that the following action after a lapse of time is a direction change to the right lane as indicated by the arrow B3 with the peripheral edge only hatched. It is then assumed that the occupant desires to keep moving straight because the safety takes priority over any matter.

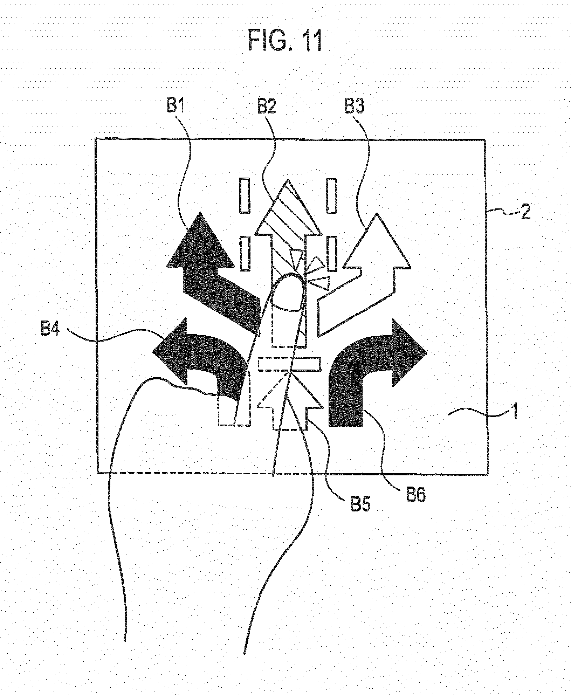

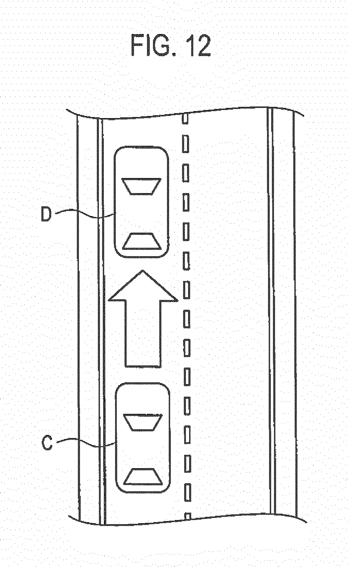

As shown in Fig. 11, the instruction unit 1 instructs the controller 3 to keep moving straight according to the operation by the occupant performed on the region corresponding to the arrow B2 indicating the forward movement. Accordingly, the action to overtake the vehicle D selected by the controller 3 is canceled, so that the autonomous vehicle C can keep moving straight safely while keeping a sufficient distance from the front vehicle D, as shown in Fig. 12.

The vehicle operation device 8 included in the autonomous vehicle C according to the embodiment of the present invention shows the occupant the current action of the autonomous vehicle C and the following action performed after a lapse of time, so that the occupant can easily determine whether the own intention conforms to the action of the autonomous vehicle C to be performed. The occupant can therefore immediately change the action of the autonomous vehicle C when the intention of the occupant does not conform to the action selected by the autonomous vehicle C.

According to the vehicle operation device 8, the presenting unit 2 shows the actions made in at least three directions, the forward direction, the right direction, and the left direction, so as to easily distinguish the actions made by the autonomous vehicle C.

According to the vehicle operation device 8, the instruction unit 1 shows the arrows indicating the directions in which the autonomous vehicle C moves, so that the occupant can intuitively distinguish the actions of the autonomous vehicle C.

According to the vehicle operation device 8, the presenting unit 2 changes the indications of the marks denoting the respective actions of the autonomous vehicle C depending on the determination made by the action determination unit 33, so that the occupant can easily recognize which action cannot be performed, which contributes to maintaining the autonomous driving safely and regally.

According to the vehicle operation device 8, the instruction unit 1 prohibits the operation by the occupant according to the determination made by the action determination unit 33, so as to control the autonomous vehicle C to drive safely and regally.

According to the vehicle operation device 8, the action determination unit 33 determines whether to permit the actions to be made by the autonomous vehicle C according to road information that the detection unit 42 cannot detect, which contributes to maintaining the autonomous driving more safely and regally.

According to the vehicle operation device 8, the presenting unit 2 indicates the current action of the autonomous vehicle C and the following action performed after a lapse of time differently from each other, so that the occupant can easily distinguish the current action and the following action after a lapse of time.

According to the vehicle operation device 8, the occupant operates the instruction unit 1 so as to directly instruct the autonomous vehicle C to make a lane change to overtake another vehicle moving in front of the autonomous vehicle C.

According to the vehicle operation device 8, the occupant can purposely stop the autonomous vehicle C regardless of the setting or selection made by the autonomous vehicle C, so as to make way for other vehicles or pedestrians or make a stop for viewing scenes.

According to the vehicle operation device 8, the instruction unit 1 and the presenting unit 2 integrally compose a touch panel display, so as to allow the occupant to recognize the displayed actions of the autonomous vehicle C more intuitively, and provide the occupant with other information such as appropriateness of each action more clearly.

### (Other Embodiments)

While the present invention has been described above by reference to the embodiment, the present invention is not intended to be limited to the statements and drawings composing part of this disclosure. Various alternative embodiments, examples, and practical techniques will be apparent to those skilled in the art from this disclosure.

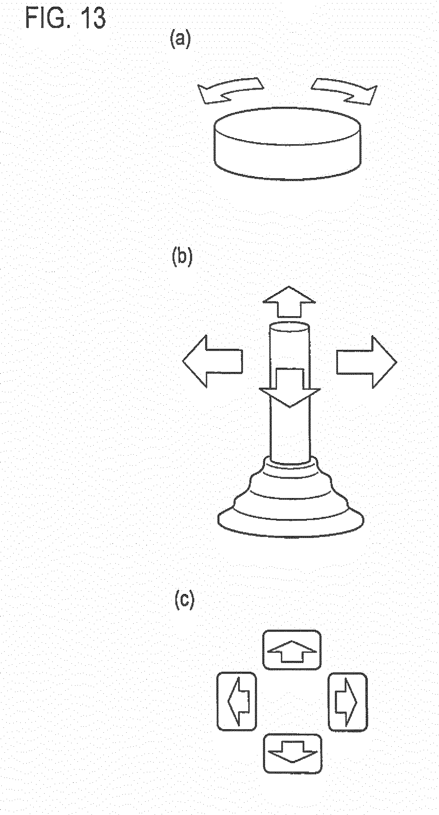

For example, in the embodiment described above, the instruction unit 1 may be various types of input devices, such as dial-type, lever-type, and button-type input devices, as shown in Fig. 13(a) to Fig. 13(c), to instruct directions to move. Although not shown in the drawings, the presenting unit 2 may provide information by voice from a speaker, and the instruction unit 1 may be a voice input device such as a microphone, so as to instruct the autonomous vehicle C to make a forward movement or a right/left turn via a voice operation made by the occupant.

The present invention, of course, includes various embodiments not described in this description, such as configurations including the various embodiments and the first to fifth operation examples mutually applied. Therefore, the scope of the present invention is defined only by the appropriate features according to the claims in view of the explanations made above.

### INDUSTRIAL APPLICABILITY

According to the present invention, a vehicle operation device can be provided that shows the occupant a current action of the autonomous vehicle and a next action performed after a lapse of time, so that the occupant can immediately change the action of the autonomous vehicle when the action selected by the autonomous vehicle does not conform to the intention of the occupant.

### REFERENCE SIGNS LIST

- A1 to A3, B1 to B6: ARROW
- C: AUTONOMOUS VEHICLE
- 1: INSTRUCTION UNIT
- 2: PRESENTING UNIT
- 8: VEHICLE OPERATION DEVICE
- 33: ACTION DETERMINATION UNIT
- 41: INFORMATION ACQUISITION UNIT
- 42: DETECTION UNIT

## Claims

1. A vehicle operation device (8) used in an autonomous vehicle (C) autonomously controlled to drive along a determined driving route, the vehicle operation device (8) comprising:
a presenting unit (2) configured to simultaneously show, to an occupant of the autonomous vehicle (C), a current action for driving of the autonomous vehicle (C), a next action for driving performed after a predetermined lapse of time, and an action for driving that the occupant of the autonomous vehicle (C) can select; and
an instruction unit (1) configured to designate intended actions for driving according to a selection operation of the occupant as the actions for driving performed by the autonomous vehicle (C) shown on the presenting unit (2), and instruct the autonomous vehicle (C) to perform the actions for driving designated according to the selection operation of the occupant,
**characterized in that**
the presenting unit (2) shows the current action for driving of the autonomous vehicle (C), the next action for driving performed after the predetermined lapse of time, and the action for driving that the occupant of the autonomous vehicle (C) can select, with different design from each other, wherein
the presenting unit indicates directions in which the autonomous vehicle (C) moves for the current action for driving, the next action for driving performed after the predetermined lapse of time and the action for driving which the occupant of the vehicle (C) can select, by a plurality of arrows (A1, A2, A3) indicating a forward direction, a right direction, and a left direction, and
when the occupant operates the arrows (A1, A2, A3) indicating the directions in which the autonomous vehicle (C) moves for the actions for driving performed by the autonomous vehicle (C), the instruction unit (1) instructs the autonomous vehicle (C) to move in the directions indicated by the arrows (A1, A2, A3) operated by the occupant.

2. The vehicle operation device (8) according to claim 1, further comprising:
a detection unit (42) configured to detect peripheral information of the autonomous vehicle (C); and
an action for driving determination unit (33) configured to make a determination of whether to permit each action for driving performed by the autonomous vehicle (C) according to the information detected by the detection unit (42) and traffic laws and regulations,
wherein the presenting unit (2) changes an indication of a mark denoting each action for driving performed by the autonomous vehicle (C) depending on the determination by the action for driving determination unit (33).

3. The vehicle operation device (8) according to claim 2, wherein the instruction unit (1) prohibits the selection operation of the occupant depending on the determination by the action for driving determination unit (33).

4. The vehicle operation device (8) according to claim 2 or 3, further comprising an information acquisition unit (41) configured to externally acquire road information about the driving route via wireless communication,
wherein the action for driving determination unit (33) makes a determination of whether to permit each action for driving performed by the autonomous vehicle (C) according to the road information acquired by the information acquisition unit (41), the information detected by the detection unit (42), and the traffic laws and regulations.

5. The vehicle operation device (8) according to any one of claims 1 to 4, wherein, when the current action for driving and the next action for driving performed after the predetermined lapse of time are different from each other, the presenting unit (2) provides the occupant with marks denoting the current for driving action and the next action for driving performed after the predetermined lapse of time indicated differently from each other.

6. The vehicle operation device (8) according to any one of claims 1 to 5, wherein the instruction unit (1) instructs the autonomous vehicle (C) to make a direction change to an adjacent lane according to the selection operation of the occupant when the autonomous vehicle (C) drives on a road divided into lanes.

7. The vehicle operation device (8) according to any one of claims 1 to 6, wherein the instruction unit (1) instructs the autonomous vehicle (C) to make a stop according to the selection operation of the occupant.

8. The vehicle operation device (8) according to any one of claims 1 to 7, wherein the instruction unit (1) and the presenting unit (2) integrally serve as a touch panel display to show the marks denoting the actions for driving performed by the autonomous vehicle (C), so that regions corresponding to the marks are operated by the occupant.

9. A vehicle operation method for an autonomous vehicle autonomously controlled to along a determined driving route, the vehicle operation method comprising the steps of:
simultaneously showing, to an occupant of the autonomous vehicle (C), a current action for driving of the autonomous vehicle (C), a next action for driving performed after a predetermined lapse of time, and an action for driving that the occupant of the autonomous vehicle (C) can select;
designating intended actions for driving according to a selection operation of the occupant as the actions for driving performed by the autonomous vehicle (C) shown on a presenting unit (2); and
instructing the autonomous vehicle (C) to perform the actions for driving designated according to the selection operation of the occupant
**characterized by**
showing the current action for driving of the autonomous vehicle (C), the next action for driving performed after the predetermined lapse of time, and the action for driving that the occupant of the autonomous vehicle (C) can select, with different design from each other, wherein
directions in which the autonomous vehicle (C) moves for the current action for driving, the next action for driving performed after the predetermined lapse of time and the action for driving which the occupant of the vehicle (C) can select, are indicated by a plurality of arrows (A1, A2, A3) indicating a forward direction, a right direction, and a left direction, and
when the occupant operates the arrows (A1, A2, A3) indicating the directions in which the autonomous vehicle (C) moves for the actions for driving performed by the autonomous vehicle (C), the autonomous vehicle (C) is instructed to move in the directions indicated by the arrows (A1, A2, A3) operated by the occupant.

## Patentansprüche

1. Fahrzeugbetriebsvorrichtung (8), die in einem autonomen Fahrzeug (C) genutzt wird, das autonom gesteuert wird, um entlang einer bestimmten Fahrroute zu fahren, wobei die Fahrzeugbetriebsvorrichtung (8) umfasst:
eine Darstellungseinheit (2), die eingerichtet ist, einem Insassen des autonomen Fahrzeugs (C) gleichzeitig eine momentane Fahraktion des autonomen Fahrzeugs (C), eine nächste Fahraktion, die nach einer vorbestimmten Zeitspanne ausgeführt wird, und eine Fahraktion, die der Insasse des autonomen Fahrzeugs (C) auswählen kann, zu zeigen; und
eine Anweisungseinheit (1), die eingerichtet ist, beabsichtigte Fahraktionen entsprechend einer Auswahltätigkeit des Insassen als die Fahraktionen, die vom autonomen Fahrzeug (C) ausgeführt werden, die auf der Darstellungseinheit (2) angezeigt werden, zu bestimmen, und das autonome Fahrzeug (C) anzuweisen, die Fahraktionen, die entsprechend der Auswahltätigkeit des Insassen bestimmt wurden, auszuführen,
**dadurch gekennzeichnet, dass**
die Darstellungseinheit (2) die momentane Fahraktion des autonomen Fahrzeugs (C), die nächste Fahraktion, die nach der vorbestimmten Zeitspanne ausgeführt wird, und die Fahraktion, die der Insasse des autonomen Fahrzeugs (C) auswählen kann, mit jeweils unterschiedlicher Ausgestaltung zeigt, wobei
die Darstellungseinheit Richtungen, in die sich das autonome Fahrzeug (C) bewegt für die momentane Fahraktion, die nächste Fahraktion, die nach der vorbestimmten Zeitspanne ausgeführt wird, und die Fahraktion, die der Insasse des autonomen Fahrzeugs (C) auswählen kann, durch eine Mehrzahl an Pfeilen (A1, A2, A3), die eine Vorwärtsrichtung, eine rechte Richtung und eine linke Richtung angeben, anzeigt, und
wenn der Insasse die Pfeile (A1, A2, A3), die die Richtungen, in die sich das autonome Fahrzeug (C) bewegt für die Fahraktionen, die das autonome Fahrzeug (C) durchführt, betätigt, die Anweisungseinheit (1) das autonome Fahrzeug (C) anweist, sich in die durch die Pfeile (A1, A2, A3), die der Insasse betätigt hat, angezeigte Richtungen zu bewegen.

2. Fahrzeugbetriebsvorrichtung (8) nach Anspruch 1, ferner umfassend:
eine Erkennungseinheit (42), die eingerichtet ist, periphere Information des autonomen Fahrzeugs (C) zu erkennen; und
eine Fahraktion-Bestimmungseinheit (33), die eingerichtet ist, zu bestimmen, ob jede Fahraktion, die vom autonomen Fahrzeug (C) durchgeführt wird, entsprechend der von der Erkennungseinheit (42) erkannten Information und Verkehrsregeln und -vorschriften erlaubt wird,
wobei die Darstellungseinheit (2) eine Anzeige einer Markierung ändert, die jede Fahraktion, die vom autonomen Fahrzeug (C) durchgeführt wird, kennzeichnet in Abhängigkeit von der Bestimmung durch die Fahraktion-Bestimmungseinheit (33).

3. Fahrzeugbetriebsvorrichtung (8) nach Anspruch 2, wobei die Anweisungseinheit (1)
die Auswahltätigkeit des Insassen in Abhängigkeit von der Bestimmung durch die Fahraktion-Bestimmungseinheit (33) verhindert.

4. Fahrzeugbetriebsvorrichtung (8) nach Anspruch 2 oder 3, ferner umfassend
eine Informationserfassungseinheit (41), die eingerichtet ist, Straßeninformation über eine Fahrroute über kabellose Kommunikation extern zu erfassen,
wobei die Fahraktion-Bestimmungseinheit (33) bestimmt, ob jede Fahraktion, die vom autonomen Fahrzeug (C) durchgeführt wird, entsprechend der Straßeninformation, die durch die Informationserfassungseinheit (41) erfasst wird, der Information, die durch die Erkennungseinheit (42) erkannt wird, und der Verkehrsregeln und -vorschriften erlaubt wird.

5. Fahrzeugbetriebsvorrichtung (8) nach einem der Ansprüche 1 bis 4, wobei,
wenn die momentane Fahraktion und die nächste Fahraktion, die nach der vorbestimmten Zeitspanne ausgeführt wird, sich voneinander unterscheiden, die Darstellungseinheit (2) dem Insassen Markierungen bereitstellt, die die momentane Fahraktion und die nächste Fahraktion, die nach der vorbestimmten Zeitspanne ausgeführt wird, kennzeichnen, die unterschiedlich voneinander angezeigt werden.

6. Fahrzeugbetriebsvorrichtung (8) nach einem der Ansprüche 1 bis 5, wobei
die Anweisungseinheit (1) das autonome Fahrzeug (C) anweist, eine Richtungsänderung zu einer angrenzenden Fahrspur durchzuführen, entsprechend der Auswahltätigkeit des Insassen, wenn das autonome Fahrzeug (C) auf einer Straße fährt, die in Fahrspuren geteilt ist.

7. Fahrzeugbetriebsvorrichtung (8) nach einem der Ansprüche 1 bis 6, wobei
die Anweisungseinheit (1) das autonome Fahrzeug (C) anweist, zu stoppen, entsprechend der Auswahltätigkeit des Insassen.

8. Fahrzeugbetriebsvorrichtung (8) nach einem der Ansprüche 1 bis 7, wobei
die Anweisungseinheit (1) und die Darstellungseinheit (2) integral als ein Berührungsbildschirm dienen, um die Markierungen, die die Fahraktionen, die vom autonomen Fahrzeug (C) durchgeführt werden, kennzeichnen, zu zeigen, so dass Bereiche, die den Markierungen entsprechen, vom Insassen betätigt werden.

9. Fahrzeugbetriebsverfahren für ein autonomes Fahrzeug, das autonom entlang einer bestimmten Fahrroute gesteuert wird, wobei das Fahrzeugbetriebsverfahren die Schritte umfasst:
gleichzeitiges Zeigen, zu einem Insassen des autonomen Fahrzeugs (C), einer momentanen Fahraktion des autonomen Fahrzeugs (C), einer nächsten Fahraktion, die nach einer vorbestimmten Zeitspanne ausgeführt wird, und einer Fahraktion, die der Insasse des autonomen Fahrzeugs (C) auswählen kann;
Bestimmen von beabsichtigten Fahraktionen entsprechend einer Auswahltätigkeit des Insassen als die Fahraktionen, die vom autonomen Fahrzeug (C) ausgeführt werden, die auf einer Darstellungseinheit (2) angezeigt werden; und
Anweisen des autonomen Fahrzeugs (C), die Fahraktionen, die entsprechend der Auswahltätigkeit des Insassen bestimmt wurden, auszuführen
**gekennzeichnet durch**
Zeigen der momentanen Fahraktion des autonomen Fahrzeugs (C), der nächsten Fahraktion, die nach der vorbestimmten Zeitspanne ausgeführt wird, und der Fahraktion, die der Insasse des autonomen Fahrzeugs (C) auswählen kann, mit jeweils unterschiedlicher Ausgestaltung, wobei
Richtungen, in die sich das autonome Fahrzeug (C) bewegt für die momentane Fahraktion, die nächste Fahraktion, die nach der vorbestimmten Zeitspanne ausgeführt wird, und die Fahraktion, die der Insasse des autonomen Fahrzeugs (C) auswählen kann, durch eine Mehrzahl an Pfeilen (A1, A2, A3), die eine Vorwärtsrichtung, eine rechte Richtung und eine linke Richtung angeben, angezeigt werden, und
wenn der Insasse die Pfeile (A1, A2, A3), die die Richtungen, in die sich das autonome Fahrzeug (C) bewegt für die Fahraktionen, die das autonome Fahrzeug (C) durchführt, betätigt, das autonome Fahrzeug (C) angewiesen wird, sich in die durch die Pfeile (A1, A2, A3), die der Insasse betätigt hat, angezeigte Richtungen zu bewegen.

## Revendications

1. Dispositif de fonctionnement de véhicule (8) utilisé dans un véhicule autonome (C) commandé de manière autonome pour conduire le long d'un itinéraire de conduite déterminé, le dispositif de fonctionnement de véhicule (8) comprenant :
une unité de présentation (2) configurée pour montrer simultanément, à un occupant du véhicule autonome (C), une action de conduite courante du véhicule autonome (C), une action de conduite suivante effectuée après un laps de temps prédéterminé, et une action de conduite que l'occupant du véhicule autonome (C) peut sélectionner ; et
une unité d'instruction (1) configurée pour désigner des actions prévues de conduite conformément à une opération de sélection de l'occupant en tant qu'actions de conduite effectuées par le véhicule autonome (C) représentées sur l'unité de présentation (2), et pour ordonner au véhicule autonome (C) d'effectuer les actions de conduite désignées conformément à l'opération de sélection de l'occupant,
**caractérisé en ce que**
l'unité de présentation (2) montre l'action de conduite courante du véhicule autonome (C), l'action de conduite suivante effectuée après le laps de temps prédéterminé, et l'action de conduite que l'occupant du véhicule autonome (C) peut sélectionner, avec un motif différent les unes des autres, dans lequel
l'unité de présentation indique des directions dans lesquelles le véhicule autonome (C) se déplace pour l'action de conduite courante, l'action de conduite suivante effectuée après le laps de temps prédéterminé et l'action de conduite que l'occupant du véhicule (C) peut sélectionner, par une pluralité de flèches (A1, A2, A3) indiquant une direction avant, une direction droite, et une direction gauche, et
lorsque l'occupant actionne les flèches (A1, A2, A3) indiquant les directions dans lesquelles le véhicule autonome (C) se déplace pour les actions de conduite effectuées par le véhicule autonome (C), l'unité d'instruction (1) ordonne au véhicule autonome (C) de se déplacer dans les directions indiquées par les flèches (A1, A2, A3) actionnées par l'occupant.

2. Dispositif de fonctionnement de véhicule (8) selon la revendication 1, comprenant en outre :
une unité de détection (42) configurée pour détecter des informations périphériques du véhicule autonome (C) ; et
une unité de détermination d'actions de conduite (33) configurée pour déterminer s'il faut autoriser chaque action de conduite effectuée par le véhicule autonome (C) en fonction des informations détectées par l'unité de détection (42) et des réglementations et législations routières,
dans lequel l'unité de présentation (2) modifie une indication d'un repère désignant chaque action de conduite effectuée par le véhicule autonome (C) en fonction de la détermination par l'unité de détermination d'actions de conduite (33).

3. Dispositif de fonctionnement de véhicule (8) selon la revendication 2,
dans lequel l'unité d'instruction (1) interdit l'opération de sélection de l'occupant en fonction de la détermination par l'unité de détermination d'actions de conduite (33).

4. Dispositif de fonctionnement de véhicule (8) selon la revendication 2 ou 3, comprenant en outre une unité d'acquisition d'informations (41) configurée pour acquérir de manière externe des informations routières concernant l'itinéraire de conduite via une communication sans fil,
dans lequel l'unité de détermination d'actions de conduite (33) détermine s'il faut autoriser chaque action de conduite effectuée par le véhicule autonome (C) en fonction des informations routières acquises par l'unité d'acquisition d'informations (41), des informations détectées par l'unité de détection (42), et des réglementations et législations routières.

5. Dispositif de fonctionnement de véhicule (8) selon l'une quelconque des revendications 1 à 4, dans lequel, quand l'action de conduite courante et l'action de conduite suivante effectuée après le laps de temps prédéterminé sont différentes l'une de l'autre, l'unité de présentation (2) fournit à l'occupant des repères désignant l'action de conduite courante et l'action de conduite suivante effectuée après laps de temps prédéterminé indiquées différemment l'une de l'autre.

6. Dispositif de fonctionnement de véhicule (8) selon l'une quelconque des revendications 1 à 5, dans lequel l'unité d'instruction (1) ordonne au véhicule autonome (C) d'effectuer un changement de direction vers une voie adjacente en fonction de l'opération de sélection de l'occupant lorsque le véhicule autonome (C) circule sur une route divisée en voies.

7. Dispositif de fonctionnement de véhicule (8) selon l'une quelconque des revendications 1 à 6, dans lequel l'unité d'instruction (1) ordonne au véhicule autonome (C) de faire un arrêt conformément à l'opération de sélection de l'occupant.

8. Dispositif de fonctionnement de véhicule (8) selon l'une quelconque des revendications 1 à 7, dans lequel l'unité d'instruction (1) et l'unité de présentation (2) servent intégralement d'affichage tactile pour montrer les repères désignant les actions de conduite effectuées par le véhicule autonome (C), de sorte que des régions correspondant aux repères sont actionnées par l'occupant.

9. Procédé de fonctionnement de véhicule pour un véhicule autonome commandé de manière autonome pour conduire le long d'un itinéraire de conduite déterminé, le procédé de fonctionnement de véhicule comprenant les étapes consistant à :
montrer simultanément, à un occupant du véhicule autonome (C), une action de conduite courante du véhicule autonome (C), une action de conduite suivante effectuée après un laps de temps prédéterminé, et une action de conduite que l'occupant du véhicule autonome (C) peut sélectionner ;
désigner des actions de conduite prévues conformément à une opération de sélection de l'occupant en tant qu'actions de conduite effectuées par le véhicule autonome (C) représentées sur une unité de présentation (2) ; et
ordonner au véhicule autonome (C) d'effectuer les actions de conduite désignées conformément à l'opération de sélection de l'occupant
**caractérisé par**
la représentation de l'action de conduite courante du véhicule autonome (C), de l'action de conduite suivante effectuée après le laps de temps prédéterminé, et de l'action de conduite que l'occupant du véhicule autonome (C) peut sélectionner, avec un motif différent les unes des autres autre, dans lequel
des directions dans lesquelles le véhicule autonome (C) se déplace pour l'action de conduite courante, l'action de conduite suivante effectuée après le laps de temps prédéterminé et l'action de conduite que l'occupant du véhicule (C) peut sélectionner, sont indiquées par une pluralité de flèches (A1, A2, A3) indiquant une direction avant, une direction droite, et une direction gauche, et
lorsque l'occupant actionne les flèches (A1, A2, A3) indiquant les directions dans lesquelles le véhicule autonome (C) se déplace pour les actions de conduite effectuées par le véhicule autonome (C), le véhicule autonome (C) reçoit une instruction de se déplacer les directions indiquées par les flèches (A1, A2, A3) actionnées par l'occupant.
